Europäisches Patentamt

European Patent Office

Office européen des brevets

(19)

(11) Publication number: **0 076 624**

**A1**

(12) # EUROPEAN PATENT APPLICATION

(21) Application number: **82305129.7**

(22) Date of filing: **29.09.82**

(51) Int. Cl.³: **B 65 D 5/36**
**E 04 B 1/343**

(30) Priority: **03.10.81 GB 8129920**
**24.04.82 GB 8211915**

(43) Date of publication of application:
**13.04.83 Bulletin 83/15**

(84) Designated Contracting States:
**AT BE CH DE FR IT LI LU NL SE**

(71) Applicant: **Robertson, John Andrew James**
**80, Amberwood Drive**
**Baguley Manchester M23 9PR(GB)**

(72) Inventor: **Robertson, John Andrew James**
**80, Amberwood Drive**
**Baguley Manchester M23 9PR(GB)**

(74) Representative: **Funge, Harry et al,**
**WILSON, GUNN & ELLIS 41 Royal Exchange Cross**
**Street**
**Manchester M2 7BD(GB)**

(54) **Improved collapsible container.**

(57) This invention relates to a five sided container comprising five or more generally square elements 1, 2, 3, 8, 9 which may be reversibly collapsed from an arrangement in which adjacent sides 2, 3, 8, 9 are generally perpendicular, adjacent elements being secured together by hinges 6, 7, three or more of the elements including additional hinges 4, 5, 10 extending between opposite vertices thereof. The container may find use for storage purposes, for protective coverings, as buildings, furniture or as waterproof vessels.

Fig.1

EP 0 076 624 A1

-1-

IMPROVED COLLAPSIBLE CONTAINER

This invention relates to collapsible containers, particularly to containers which may be reversibly collapsed, for example, for storage purposes.

According to this invention a five-sided container comprising five or more generally square elements, may be reversibly collapsed from an arrangement in which adjacent sides are generally perpendicular, adjacent elements being secured together by hinges, three or more of the elements including additional hinges extending between opposite vertices thereof.

Preferably the elements including additional hinges may pivot about said additional hinges so that exterior faces of each said element are brought into mutual contact when the container is fully collapsed.

According to a preferred aspect of the invention the container may be caused to collapse by causing a first four vertices thereof to twist generally in a common plane relative to a second four vertices.

Elements of containers in accordance with the invention may be provided with two intersecting hinges each extending between opposite vertices of the element.

A first preferred embodiment of the invention comprises a square base element incorporating an additional hinge extending between opposite vertices thereof, four sides secured by hinges to the base, and secured to adjacent sides by hinges, a pair of said sides incorporating additional hinges extending between opposite vertices of the respective sides, none of said additional hinges extending from a vertex common to another said additional hinge.

A container constructed in accordance with the first preferred embodiment may be caused to collapse by twisting the vertices of one side which does not incorporate an additional hinge relative to the vertices of the other side which does not incorporate an additional hinge.

Rectangular containers may comprise two, three or more containers constructed in accordance with the first preferred embodiment of the invention joined together. The common sides may be removed, or the container may remain divided into compartments. Thus a preferred rectangular container comprises a base divided by a hinge into two equal square elements, each bisected by a diagonally extending hinge. The diagonally extending hinges may or may not extend to a common vertex. The longer sides of the rectangular container are each divided by a hinge into two equal square elements, each of the latter being bisected by a diagonally extending hinge. The latter hinges may or may not extend to a common vertex. The short sides of the containers are preferably not provided with hinges. Containers in accordance with the invention may comprise three or more square base elements.

A second preferred embodiment of the invention comprises a square base and four square sides secured to the base and to adjacent sides by means of hinges and arranged in the form of a cube, each said other side incorporating an additional hinge extending between opposite vertices thereof, none of said additional hinges extending between vertices common to other said additional hinges.

A container constructed in accordance with the second preferred embodiment may be caused to collapse by causing vertices of said base to twist relative to the remaining vertices.

Preferably containers in accordance with this invention incorporate a minimal number of hinges, thereby providing a more durable and rigid structure.

A collar may be disposed at the mouth of the container so as to prevent deformation of the

-4-

square mouth and consequent collapse of the container. Thus a container in accordance with the invention may be erected from a collapsed state and then rendered non-collapsible by attachment of a collar. The collar may incorporate a square or rectangular slot arranged to fit over the sides of the container around the mouth of the latter. The collar may form part of a lid for the container or may be arranged so that a lid may be attached to it.

Containers in accordance with the invention may be provided with lockable hinges which serve to make them non-collapsible.

Preferably containers in accordance with the invention are formed from plastics material. The hinges of such containers may comprise thin, flexible portions integral with the rigid sides. The containers may be formed from a single moulding for example, by injection or blow moulding.

Containers in accordance with the invention may be spring loaded to facilitate collapse or erection thereof. Thus spring means may extend between two or more vertices which move towards each other upon collapse of the container thereby facilitating collapse. Alternatively spring means

-5-

may extend between two or more vertices which move away from each other when the container is collapsed thereby facilitating erection.

Containers in accordance with this invention may be used as temporary buildings, for example as site huts for construction workers, as beach huts and temporary accommodation for emergencies or natural disasters. Thus a container may have sides 3 metres in length and may be fabricated from wood such as marine plywood, plastics material, sheet metal or laminated materials such as foamed plastics material having a metallic skin. Temporary buildings may comprise generally cubic or rectangular containers or may comprise truncated cubic or rectangular containers. Truncated containers may incorporate sloping roofs and may be easier to erect than non-truncated containers. The roof of a building may comprise half of a container in accordance with the invention, the latter having been notionally diagonally bisected. The roof may, therefore, be collapsible and may be integral with one edge of the container. Containers for use as buildings may incorporate windows, doors, ventilators, drains, collapsible seating or other fixtures. Such containers may

-6-

include springs or pistons operated by compressed air to facilitate erection or collapse thereof.

Containers in accordance with any aspect of this invention may be folded from flat blanks cut out to the necessary shape.

According to a third preferred embodiment of the invention adjacent sides are connected by means of a flap provided with a hinge and which may be folded against one of the sides when the container is erect. Such an embodiment may be manufactured from a square or rectangular blank. The resultant container has the advantage that the sides are continuous and may, therefore, be waterproof.

The invention may be better appreciated from the following description by way of examples with reference to Figure 1 to 27 of the accompanying drawings, of which:-

Figure 1 is a perspective view of a container in accordance with the first preferred embodiment of the invention;

Figure 2 is a perspective plan view of the container shown in Figure 1;

Figures 3 to 6 are perspective plan views of the container shown in Figure 2 in successive stages of collapse;

Figure 7 shows a container fitted with a window and door for use as a temporary building;

Figure 8 shows a side elevation of a truncated container for use as a temporary building;

Figures 9, 10 and 11 show successive stages in collapse of the container shown in Figure 7;

Figures 12 to 15 and 16 to 19 show alternative modes of collapsing a rectangular container;

Figure 20 shows a blank for a cubic container;

Figure 21 shows a cubic container;

Figure 22 shows a blank for a rectangular container;

Figure 23 shows the rectangular container;

Figure 24 shows a blank for an alternative rectangular container;

Figure 25 shows a blank for a further alternative rectangular container;

Figure 26 shows a container with an integral roof; and

Figure 27 shows the container of Figure 26 in a state of partial collapse.

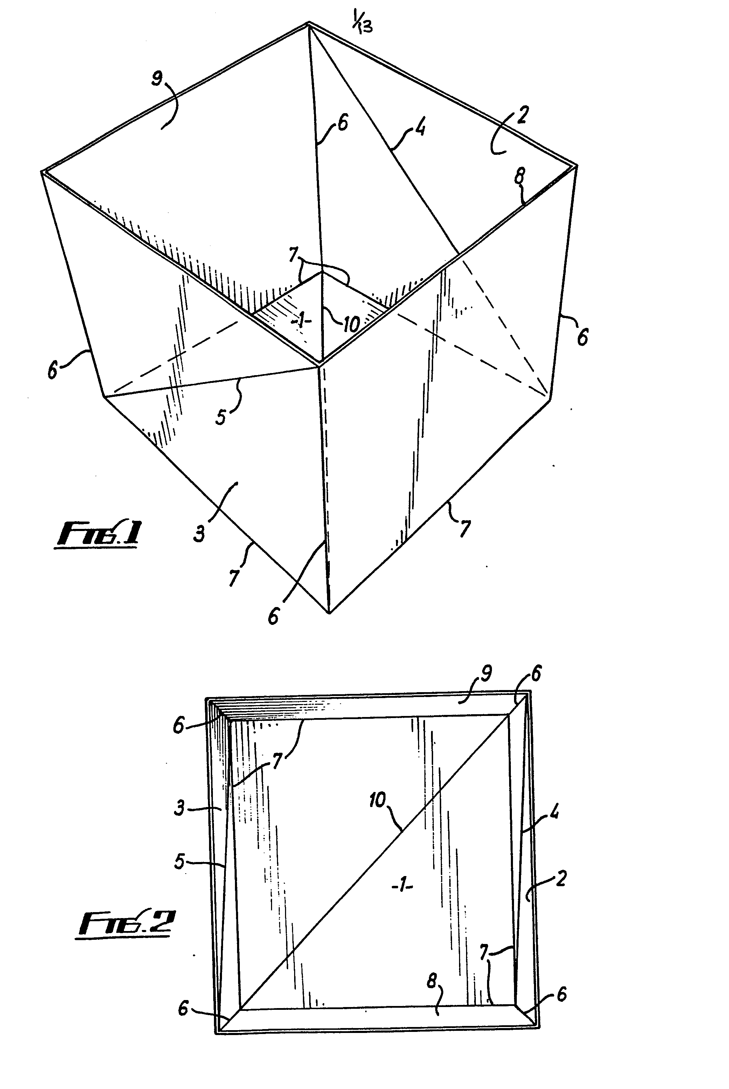

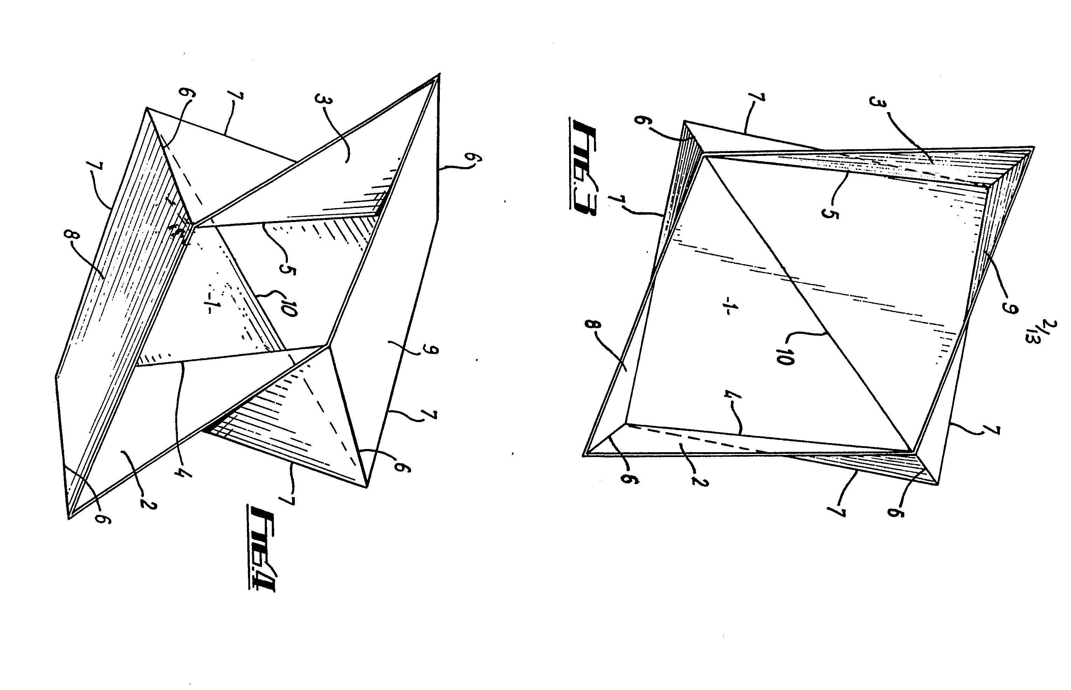

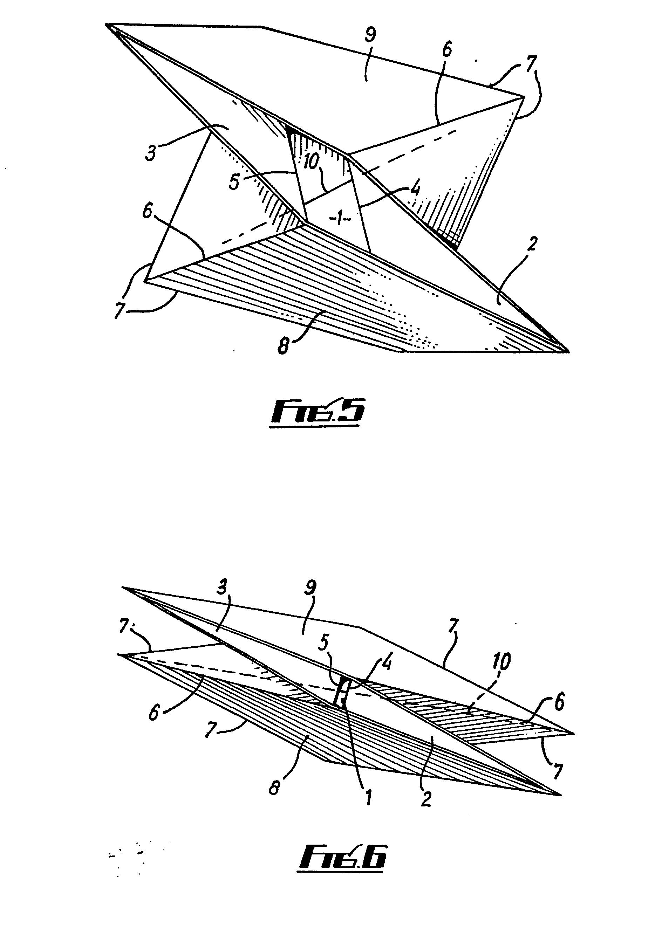

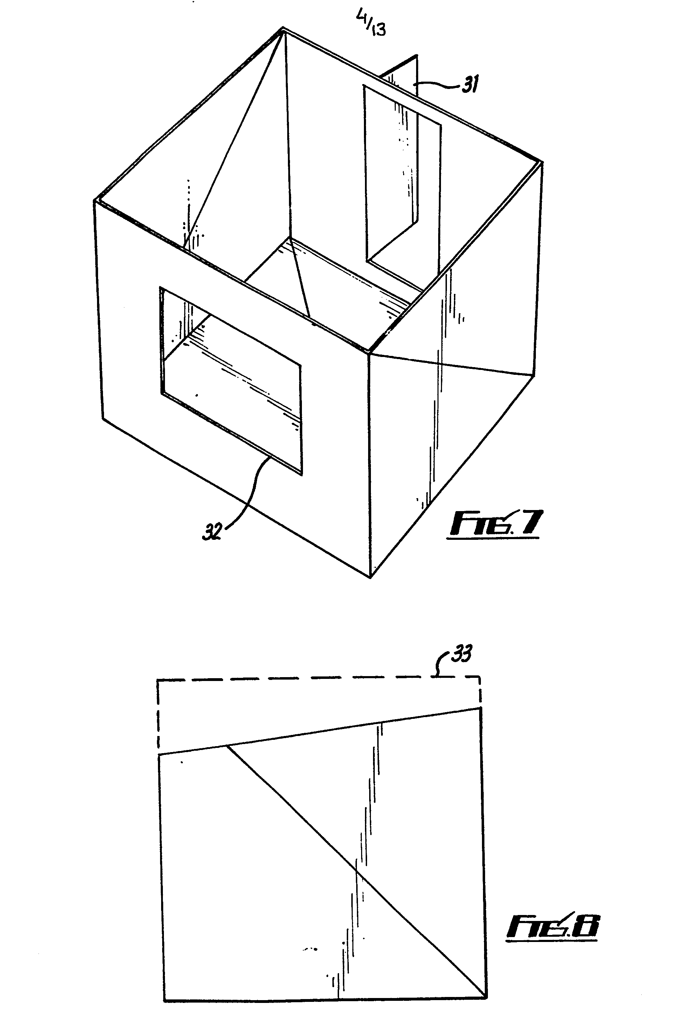

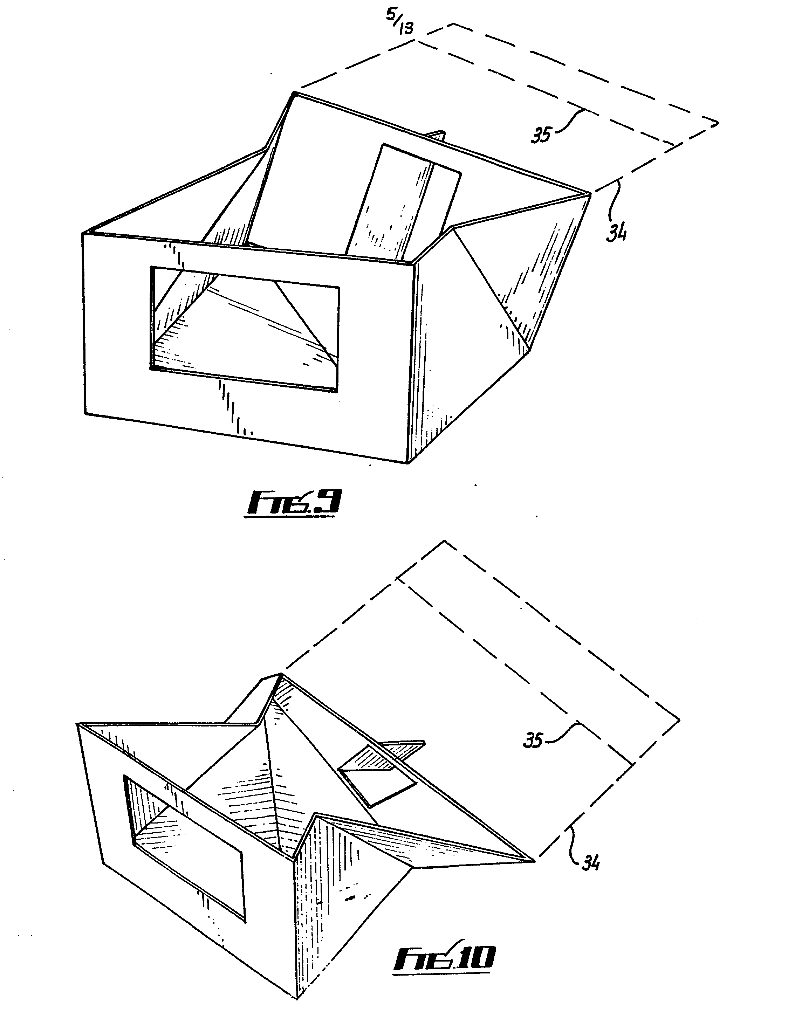

Figures 1 to 6 show a perspective view of a container constructed in accordance with the first preferred embodiment of the invention. The exterior faces of the sides are shown in black and white for clarity.

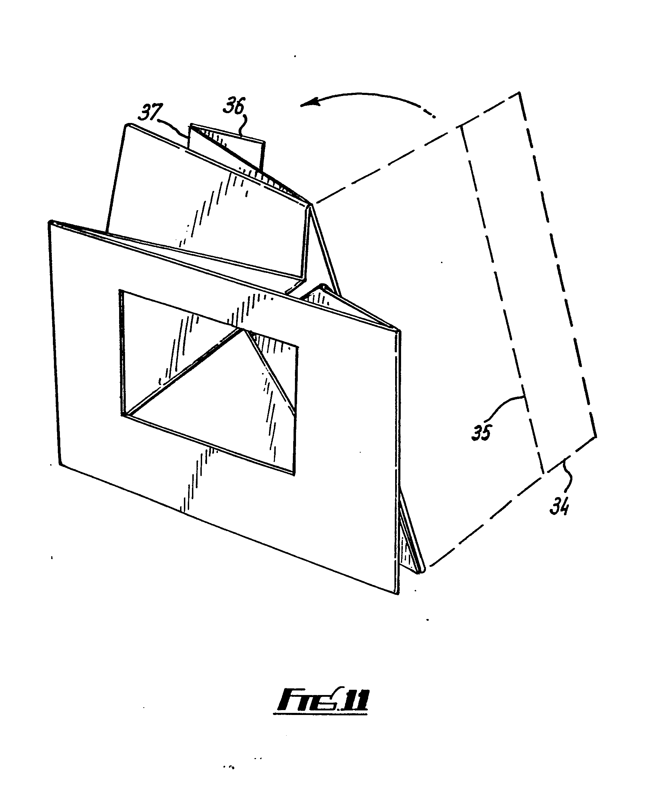

The container comprises a square base 1 and four square sides 2, 3, 8, 9 two of which 2, 3 are provided with hinges 4, 5 which extend between opposite vertices of the respective sides. The base is hinged at 10. Each side is hinged to the base 1 and to adjacent sides by means of hinges 6, 7. The container is composed of a single plastics injection moulding, the hinges being formed by flexible constrictions in the plastics material. Various stages in the collapse of the container are shown in Figures 3 to 6. The two sides 8 and 9 are brought together as the container collapses and rotate through a relative angle of 90°. Figure 6 shows the container in an almost totally collapsed state. When completely collapsed the sides 8, 9 which are not hinged lie parallel with the sides 3, 4 and base 1 folded between them. The container may be erected by twisting the sides 8, 9 relative to each other.

Containers in accordance with this

-9-

invention have many uses.   They may be used for storage, inverted and used as protective coverings, or used as buildings.  No tools are required for erection of the containers.

Containers in accordance with this invention may be made rigid and not liable to collapse by attaching a square frame to the upper vertices thereof or other upper parts of the container, thereby preventing a relative movement of these vertices.   Suitable frames include lids or roofs with members for engaging the upper part of the container and frames provided with means adapted to receive a separate lid.

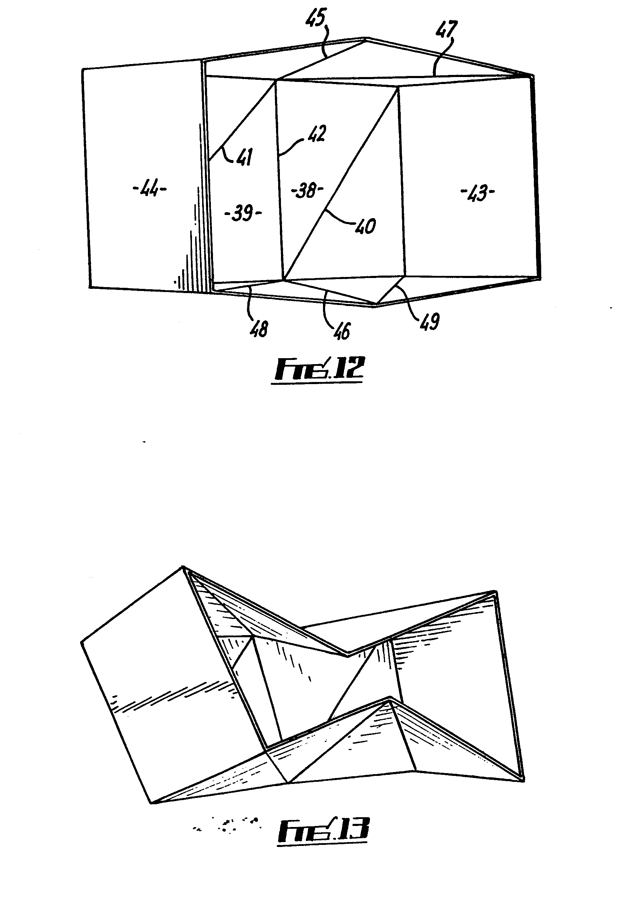

Figure 7 shows a collapsible container arranged for use as a temporary building.  The roof is not shown.   The container incorporates a door 31 and a window 32 located in walls of the container which do not have diagonally extending hinges.    The roof (not shown) may clip onto the walls of the container and serve to lock the walls into position.

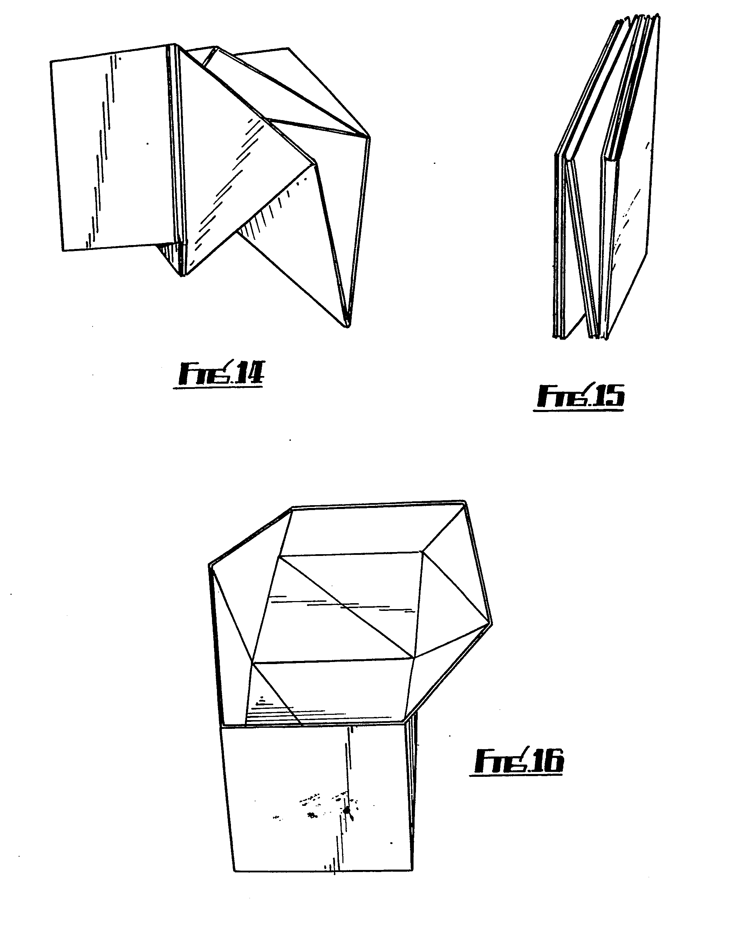

Figure 8 shows a side elevation of a building similar to that shown in Figure 7 but having a sloping roof.    The portion of the profile which has been notionally removed is shown by the dotted lines 33. The truncation makes erection and collapse of the building easier and facilitates drainage from the roof.

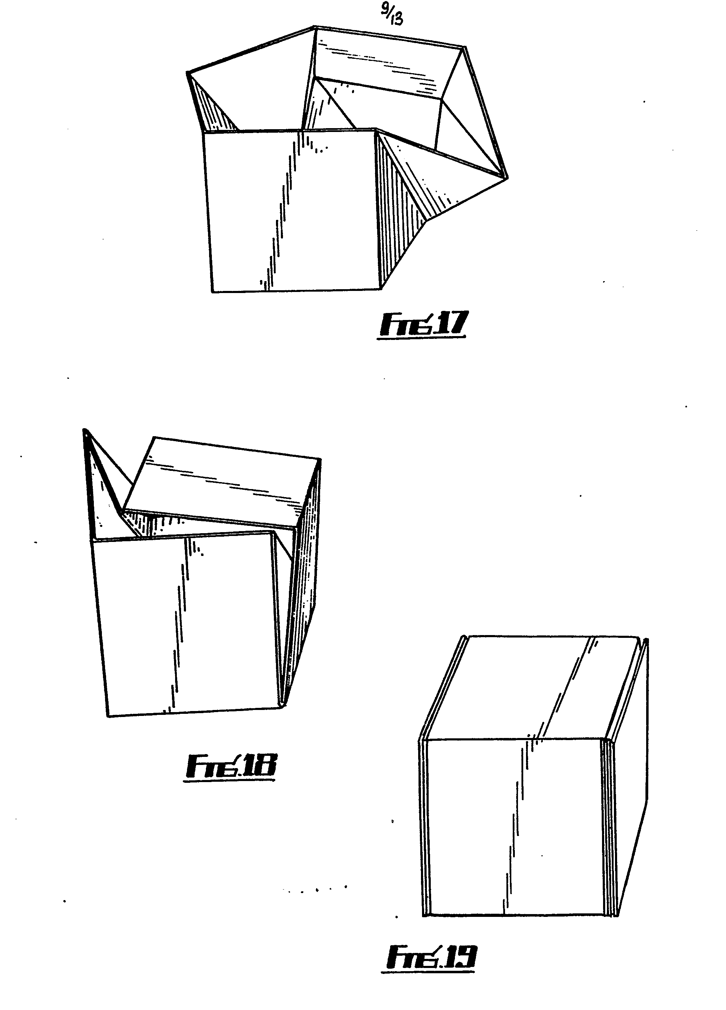

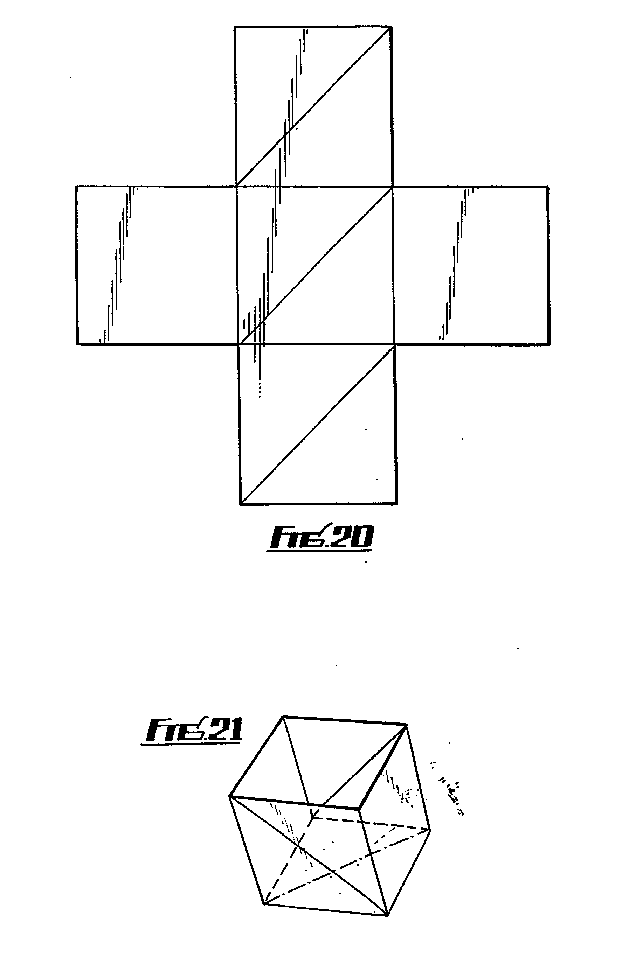

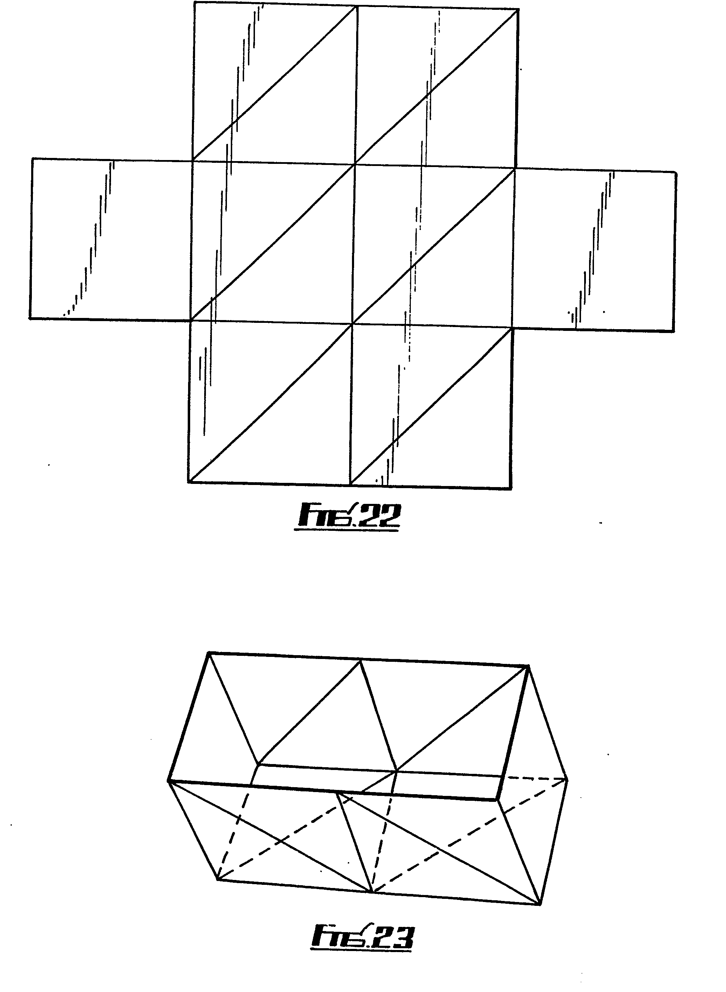

Figures 9 to 11 show successive stages in collapse of the container shown in Figure 7. The roof 34 shown in dotted lines, includes a hinge 35 to facilitate storage as shown in Figure 11 in which the roof 34 is shown in dotted lines prior to complete collapse and in solid lines 36 after folding about the hinge 37 for storage.

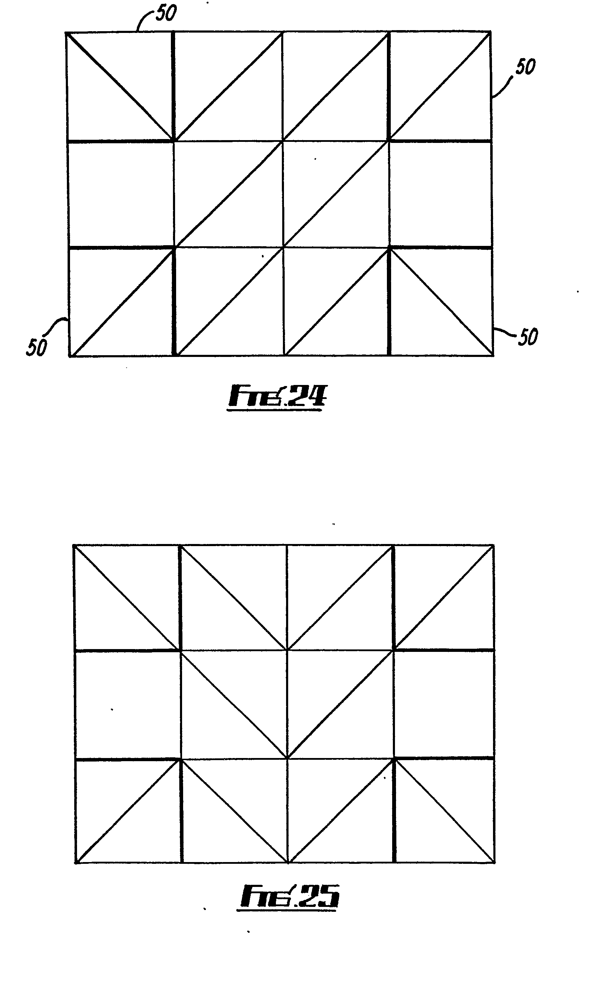

Figure 12 shows a rectangular container viewed from a position to one side of the open mouth thereof. The base of the container comprises two square portions 38, 39, bisected by diagonally extended hinges 40, 41 and joined together by a hinge 42. The two short sides of the container 43, 44 are not bisected by hinges, but the long sides are each divided into two squares by means of a hinge 45, 46 and each square section is itself diagonally bisected by a hinge, e.g. 47, 48, 49. This container may be collapsed in two ways, commencing either by urging the long sides outwards or inwards.

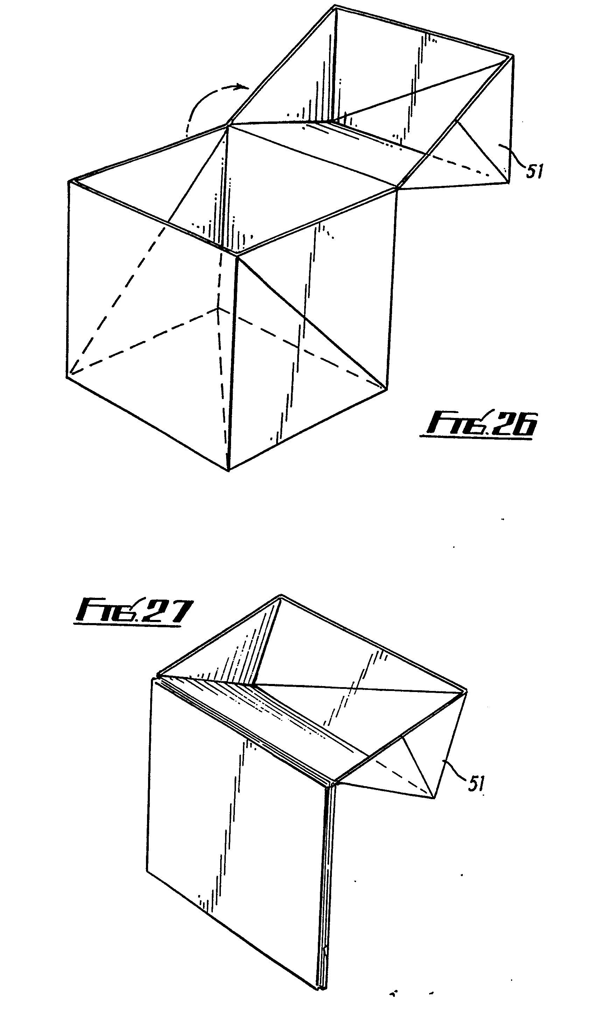

Figures 13 to 15 illustrate collapse of a container by urging the long sides inwards and show that

-11-

the container may by this method be caused to collapse into an arrangement wherein the sides are disposed generally parallel to each other. Figures 16 to 24 show how a container shown in Figure 12 may be collapsed by distorting the long sides outwardly. Successive stages of collapse are shown in Figures 17 to 24, the latter Figure showing the resultant cubic arrangement. Thus collapse of an open rectangular container (Figure 21) results in a closed cubic container (Figure 24).

Figure 20 shows a blank for a cubic container shown in Figure 21. The blank may be cut out of suitable material or moulded from a plastics material. The edges which cooperate when the container is assembled as shown in Figure 21 are secured together by means of the hinges therebetween.

Figure 22 shows a blank for a rectangular container and Figure 23 shows the assembled container. The rectangular containers in accordance with this invention could be formed with bases comprising three or more square units joined to each other.

Containers in accordance with this invention may find many uses. Rectangular containers are

0076624

-12-

particularly suitable for use as boats since waterproof hinges may be easily provided by moulding the container in one piece from plastics material. The containers may also be used for furniture such as garden furniture.

Figure 24 shows a blank for a rectangular container in which the corners between adjacent sides are folded from flaps 50 which may be disposed adjacent the interior or exterior of an adjoining side.

Figure 25 illustrates a similar blank to that of Figure 24, but having a different arrangement of additional hinges.

The container made from the blank shown in Figure 24 may be collapsed by rotation of one of the ends thereof in a continuous spiral motion. The container made from the blank shown in Figure 25 is collapsed by rotation of each cubic half portion in an opposite direction. Both of the containers shown in Figures 24 and 25 are waterproof if formed from a waterproof blank.

Figure 26 illustrates a cubic container in the form of a building having an integral roof. The building may be as described previously. The roof 51 has the form of a diagonally bisected cubic container in accordance with the invention and is

-13-

independently collapsible.  Figure 27
illustrates the building and roof  with the
building collapsed.

0076624

-14-

<u>CLAIMS:-</u>

1.     A five-sided container characterised in comprising five or more generally square elements (1,2,3,8,9), which may be reversibly collapsed from an arrangement in which adjacent sides are generally perpendicular, adjacent elements being secured together by hinges (6), three or more of the elements including additional hinges (4,5,10) extending between opposite vertices thereof.

2.     A container as claimed in claim 1, characterised in having a generally cubic shape.

3.     A container as claimed in claim 1, characterised in having the shape of a rectangular parallelepiped.

4.     A container as claimed in any preceding claim, characterised in that the elements (1,2,3) including additional hinges may pivot about said additional hinges (4,5,10) so that exterior faces of each said element are brought generally into mutual contact as the container is fully collapsed.

5.     A container as claimed in any preceding claim, chacterised in that the container may be caused to collapse by causing a first four vertices thereof to twist generally in a common plane relative to a second four vertices.

6.     A container as claimed in any preceding claim characterised in that

an element includes two intersecting hinges each extending between opposite vertices of the element.

7.     A container as claimed in any of claims 1 to 2, 4, 5 or 6,

characterised in

comprising a square base (1) incorporating an additional hinge (10) extending between opposite vertices thereof, four sides (2,3,8,9) secured by hinges (7) to the base and secured to adjacent sides by hinges (6), a pair of said other sides (2,3) incorporating additional hinges (4,5) extending between opposite vertices of the respective sides, none of said additional hinges extending from a vertex common to another said additional hinge.

8.     A rectangular container

characterised in

comprising three sides and the base of a container as claimed in claim 7.

9.     A rectangular container as claimed in any of claims 1, 3 to 6 or 8

characterised in

comprising a base divided by a hinge (42) into two square elements (38,39) each bisected by a diagonally extending hinge (40,41).

10. A rectangular container as claimed in any of claims 1, 3 to 6, 7 or 8

characterised in that

the longer sides are each divided by a hinge (45,46) into two equal square elements, each said element being bisected by a diagonally extending hinge

(47,48,49).

11. A container as claimed in claim 1,

chacterised in

comprising a square base and four square sides secured to the base and to adjacent sides by means of hinges and arranged in the form of a cube, each side incorporating an additional hinge extending between opposite vertices thereof, none of said additional hinges extending between vertices common to other said additional hinges.

12. A rectangular container

characterised in

comprising three sides and the base of a container as claimed in claim 11.

13. A container as claimed in any preceding claim, characterised in that

a spring is provided to facilitate erection or collapse of the container.

14.    A temporary building

characterised in

comprising a container as claimed in any preceding claim.

15.    A roof for a temporary building

characterised in

comprising a diagonally bisected container (51) in accordance with any of claims 1 to 13.

16.    A container as claimed in any preceding claim, characterised in that

adjacent sides are connected by a flap (50) provided with a hinge by which the flap may be folded in against a side of the erect container.

17.    A blank for a container in accordance with any preceding claim.

Fig.1

Fig.2

0076624

0076624

FIG.3

FIG.4

**FIG.5**

**FIG.6**

4/13

31

32

*Fig.7*

33

*Fig.8*

35

34

_FIG.9_

35

34

_FIG.10_

37 36

35

34

_FIG.11_

**FIG.12**

**FIG.13**

0076624

8/13

FIG. 14

FIG. 15

FIG. 16

Fig.17

Fig.18

Fig.19

0076624

10/13

_FIG.20_

_FIG.21_

Fig.22

Fig.23

12/13

Fig.24

Fig.25

13/13

51

_Fig.26_

_Fig.27_

51

European Patent
Office

**EUROPEAN SEARCH REPORT**

0076624

Application number

EP 82 30 5129

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| | --- | | B 65 D 5/36 |
| X | FR-A- 420 544 (J.SEGAL) *Page 1, column 2, line 51 - page 2, column 1, line 15; figures 1-7* | 1-12 | E 04 B 1/343 |
| | --- | | |
| X | US-A-1 921 946 (I.M.RUDOWITZ) *Page 1, column 1, line 32 - column 2, line 103; figures 1,3,5* | 1-12 | |
| | --- | | |
| A | US-A-2 142 921 (I.M.RUDOWITZ) *Page 1, column 2, line 26 - page 2, column 1, line 39; figures 22,24,26* | 1-12, 16,17 | |
| | --- | | |
| A | FR-A-2 077 127 (J.MASSAU) *Page 3, lines 19-22* | 13 | TECHNICAL FIELDS SEARCHED (Int. Cl. ³) |
| | --- | | |
| A | FR-A- 599 384 (R.LEVEUF) | | B 65 D |
| | ----- | | E 04 B |

The present search report has been drawn up for all claims

| Place of search | Date of completion of the search | Examiner |
|---|---|---|
| THE HAGUE | 21-12-1982 | COMEL E. |